# FASCICULE DE BREVET EUROPEEN

(11) **EP 1 155 389 B1**
(45) Date de publication et mention de la délivrance du brevet: **14.04.2004**
(21) Numéro de dépôt: 00907718.1
(22) Date de dépôt: 24.02.2000
(51) Int. Cl.: G07F 7/10

(54) **DISPOSITIF D'ACCES SECURISE A DES APPLICATIONS D'UNE CARTE A PUCE**
VORRICHTUNG FÜR GESICHERTEN ZUGANG ZU CHIPKARTENANWENDUNGEN
DEVICE FOR SECURE ACCESS TO A CHIP CARD APPLICATIONS

(30) Priorité: 25.02.1999 FR 9902363
(43) Date de publication de la demande: 21.11.2001
(73) Titulaire: STMicroelectronics S.A., 92120 Montrouge (FR)
(72) Inventeur: Sonzogni, Jacques, 13710 Fuveau (FR); Trimmer, Mark, Duffield, Belper DE5 64FX (GB)
(74) Mandataire: Ballot, Paul
(86) Numéro de dépôt international: PCT/FR2000/000465
(87) Numéro de publication internationale: WO 2000/051087

(56) Documents cités:
- EP-A- 0 766 211
- US-A- 4 797 542
- US-A- 4 831 245
- US-A- 4 930 129
- US-A- 4 985 921

## Description

La présente invention se rapporte à un dispositif d'accès sécurisé à des applications d'une carte à puce.

Plus particulièrement, l'invention concerne un dispositif d'accès à des applications d'une carte à puce tel que défini par le préambule de la revendication 1.

Un dispositif de ce type est par exemple au moins implicitement dévoilé dans les documents de brevet EP 0 512 542 et EP 0 766 211.

Un tel dispositif exploite à chaque instant des informations sur les droits, essentiellement en terme d'accès à la mémoire de la carte à puce, de la composante logicielle ou de l'intervention matérielle qui est exécutée dans la carte à puce.

Les cartes à puce les plus courantes comprennent un microprocesseur qui gère une mémoire programme. La mémoire programme est le plus souvent dédiée à une unique application ou à un ensemble d'applications chargées en même temps dans la carte à puce. Lorsque plusieurs applications sont chargées dans une carte à puce, elles présentent une relation étroite entre elles et sont toutes destinées à un même type de service. Ainsi, par exemple, une carte à puce ne peut pas simultanément jouer le rôle de carte bancaire et le rôle de carte de fidélité pour un quelconque commerce.

Afin de ne plus être limité à un unique type d'application par carte à puce, de nouvelles architectures logicielles sont envisagées. Ces nouvelles architectures logicielles exploitent le développement de langages de programmation standardisés (par exemple, le langage "JAVA") qui résolvent les problèmes de portabilité.

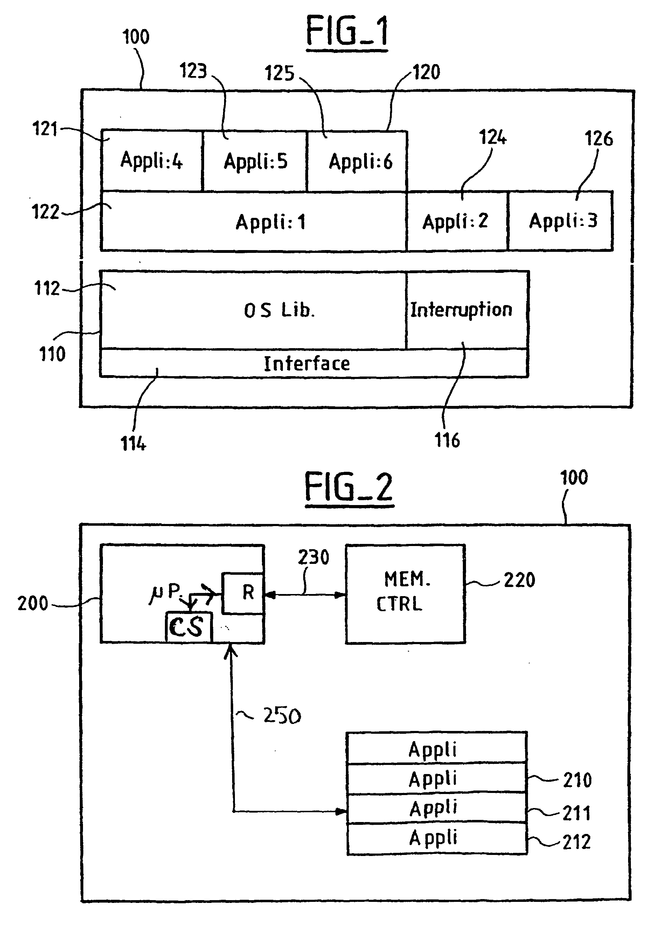

La figure 1 est une représentation simplifiée d'une architecture logicielle des projets de cartes à puce qui se développent actuellement. L'architecture représentée à la figure 1 comprend notamment une première partie 110 qui correspond à la partie dite système de l'architecture logicielle d'une carte à puce 100, et une deuxième partie 120 qui correspond à la partie dite applicative de l'architecture logicielle de la carte à puce 100. La partie système 110 de la carte à puce est essentiellement composée d'une librairie de programmes 112 du système d'exploitation de la carte à puce, d'une interface 114 pour gérer les interactions avec, par exemple, le microprocesseur de la carte à puce ou bien avec les différentes mémoires de la carte à puce, et d'un espace de gestion d'interruptions matérielles 116.

La partie applicative 120 de l'architecture logicielle est composée de différentes applications :
- une première, une deuxième, et une troisième applications principales, respectivement 122, 124 et 126;
- une première, une seconde et une troisième applications supplémentaires, respectivement 121, 123 et 125.

Les applications principales 122, 124 et 126 sont écrites dans un langage de programmation directement compréhensible par le processeur de la carte à puce.

Les applications supplémentaires 121, 123 et 125 sont typiquement des applications codées dans un langage standardisé. Ces applications peuvent être ajoutées à n'importe quel instant, à la partie système 110, dans la partie applicative 120 de l'architecture logicielle décrite. A la figure 1, les applications supplémentaires 121, 123 et 125 dépendent directement de la première application principale 122. La première application principale 122 sert ici d'interpréteur entre les applications supplémentaires et le système d'exploitation en transformant les codes des applications supplémentaires en un langage machine compréhensible par les programmes du système d'exploitation 112.

Le dispositif d'accès sécurisé à des applications d'une carte à puce selon l'invention intervient dans une architecture de ce type.

L'architecture logicielle qui vient d'être décrite est plus complexe que celle qui existe actuellement dans les cartes à puce en circulation. En effet, l'architecture décrite suppose que l'on peut ajouter des applications dans un langage de programmation standardisé, éventuellement après la mise en circulation de la carte à puce. Un niveau satisfaisant de sécurité est par conséquent plus complexe à atteindre que lorsqu'une unique application, ou un groupe d'applications dédiées à une unique fonction de la carte à puce, était chargée une fois pour toutes dans la carte à puce définitivement limitée en terme d'applications disponibles. Le risque qu'une nouvelle application vienne perturber le fonctionnement des précédentes applications est en conséquence moins élevé.

La coexistence d'applications de natures diverses dans une même carte à puce peut poser un certain nombre de problèmes : par exemple, une architecture logicielle comprenant simultanément une application dédiée à l'évaluation de la fidélité d'un client à une compagnie pétrolière et une application bancaire classique, doit garantir qu'une clef secrète servant dans l'application bancaire ne peut être lue lors de l'utilisation de l'application associée à la compagnie pétrolière.

La présente invention a pour objet de pallier les problèmes qui viennent d'être décrits.

A cet effet, l'invention propose un dispositif permettant de gérer différentes applications logicielles mises en place éventuellement à différents instants, ou différents évènements matériels, d'une carte à puce, tout en assurant une grande sécurité. Ainsi le dispositif selon l'invention offre la possibilité de détecter lorsque l'utilisateur d'une application tente d'outrepasser ses droits, par exemple en tentant d'accéder à des données qui ne sont pas destinées à l'application en question.

Pour atteindre ces objectifs, l'invention propose la mise en place d'instructions spécifiques internes au microprocesseur de la carte à puce. Ces instructions spécifiques sont des instructions d'appel (DCALL) et de retour (DRETURN). Ces instructions d'appel et de retour sont associées selon l'invention à des registres particuliers qui permettent de s'assurer du caractère autorisé ou non des opérations effectuées par l'application en cours d'exécution dans la carte à puce.

Plus précisément, le dispositif de l'invention est défini par les caractéristiques spécifiques énoncées dans la revendication 1.

Selon différents modes de réalisation de l'invention, l'entité fonctionnant dans la carte à puce peut être une application de la batterie d'applications ou un évènement matériel, ou encore le système d'exploitation associé au microprocesseur de la carte à puce.

Les différents aspects et avantages de l'invention apparaîtront plus clairement dans la suite de la description en référence aux figures qui ne sont données qu'à titre indicatif et nullement limitatif de l'invention et qui sont à présent introduites :
- la figure 1, déjà décrite, est une représentation simplifiée d'une architecture logicielle des projets de cartes à puce qui se développent actuellement,
- la figure 2 est une représentation du principe de fonctionnement selon l'invention lors de l'exécution d'une application au sein de la carte à puce.

A la figure 2, un microprocesseur 200 d'une carte à puce 100 gère l'ensemble des opérations d'une batterie d'applications 210 de la carte à puce 100.

Un bus bi-directionnel 250 assure l'échange d'informations entre le microprocesseur 200 et une quelconque application de la batterie d'applications 210. Les informations échangées peuvent être des données, des adresses ou des instructions de commande. Un contrôleur d'accès à la mémoire 220 échange des informations avec le microprocesseur 200, notamment au moyen d'une liaison 230 qui véhicule un signal, dit signal de contrôle entre le microprocesseur 200 et le contrôleur d'accès à la mémoire 220.

Par exemple, quand une entité telle que l'application 211 requiert, au moyen du bus bi-directionnel 250, l'intervention d'une autre entité telle qu'une application 212, elle exécute une instruction d'appel DCALL suivie d'une désignation de l'entité appelée.

Selon l'invention, un registre R est mis à jour lors de tels appels. Un certain nombre de bits du registre R prennent alors une valeur associée à l'entité appelée par l'instruction d'appel DCALL. Cette valeur s'apparente à une étiquette ou à un code spécifique au procédé (process) associé à l'application et sera désignée ci-après « étiquette ». Le registre R est donc un moyen matériel du microprocesseur 200 qui sert à mémoriser un code propre à l'entité de l'architecture logicielle qui est en train de s'exécuter, et à contrôler son domaine d'exécution.

Ainsi, l'instruction DCALL permet d'entrer dans le futur procédé à exécuter et d'affecter une étiquette qui sera inscrite dans le registre R. A titre d'exemple, le futur procédé en cours peut être l'accès à une mémoire figée (ROM) ou à une mémoire vive (RAM), ainsi que le traitement de codes ou de données qui sont reportés dans différentes mémoires.

De plus, le dispositif selon l'invention peut également prendre en compte des instructions dites matérielles, par exemple du type ré-initialisation. Les instructions dites matérielles sont des événements qui peuvent survenir en temps réel sur une carte à puce et qui génèrent des interruptions dans les microprocesseurs de ces cartes à puce. Ce type d'événement est géré par le dispositif selon l'invention de la même façon que les instructions logicielles : les bits du registre R prennent une valeur bien précise, appropriée à chaque événement en temps réel intervenant sur les cartes à puce, limitant et contrôlant ainsi les droits de ces événements.

L'information fournie par le registre R est ainsi susceptible de contrôler une information, par exemple au microprocesseur ou à toute autre entité extérieure à l'architecture logicielle, relative à l'identification de la zone de l'architecture logicielle concernée par l'application en cours d'exécution.

L'information fournie par le registre R permet de contrôler la zone de la mémoire de la carte à puce dans laquelle l'application a le droit d'intervenir, c'est-à-dire l'espace mémoire auquel elle peut accéder. A cette fin, une deuxième étiquette est associée à chaque groupe de données en mémoire ou à des emplacements de mémoire. Ces deuxièmes étiquettes sont préétablies lors de la programmation de la mémoire. Lorsqu'une instruction commande l'utilisation de données en mémoire, celles-ci sont lues avec la deuxième étiquette associée. Ces données seront accessibles que s'il y a autorisation donnée par le module de contrôle.

Ainsi, un éventuel utilisateur qui tente d'utiliser de façon frauduleuse le système d'exploitation afin de récupérer des données d'une application particulière, se voit refuser l'accès à ces données. En effet, les bits du registre d'état sont, dans ce cas, différents des bits qui correspondraient à un appel DCALL de l'application particulière en question. Une confrontation entre les deuxièmes étiquettes correspondant aux données auxquelles on tente d'accéder et les bits du registre R (première étiquette), communiqués par le microprocesseur au moyen de la liaison 230, est réalisée dans le contrôleur d'accès à la mémoire 220. Dans le cas où les adresses de la mémoire auxquelles on tente d'accéder ne sont pas des adresses appartenant au domaine autorisé de la dernière application ayant effectué un appel de type DCALL - cette condition étant alors déterminée à partir de la confrontation entre les étiquettes - une information d'accès illégal interdit l'accès à ces mémoires.

Le dispositif selon l'invention offre ainsi une grande sécurité dans le sens où des données qui sont destinées à une application ne peuvent pas être exploitées par une autre application.

Un second registre CS permet de garder en mémoire un code propre aux applications qui étaient actives au moment de la dernière instruction d'appel DCALL émise par l'application courante, c'est-à-dire celles qui sont à exécuter à la suite de l'application courante.

Le registre CS est destiné à garder en mémoire un code propre figurant dans le registre R de l'application qui était active lors de la dernière exécution de l'instruction d'appel DCALL. Ce registre CS sert donc de tampon (« buffer ») pour garder en mémoire la première étiquette qui était contenue dans le registre R du procédé qui était actif juste avant cette instruction DCALL.

Lorsque l'application courante a fini de s'exécuter, une instruction de retour DRET est exécutée par le microprocesseur, et les données contenues dans le second registre CS permettent de retourner à l'application qui s'exécutait précédemment et qui avait été activée par un appel DCALL. Le registre R est également mis à jour.

Ainsi, lorsque l'on exécute l'instruction DRET, on recharge dans le registre R la valeur qui est dans le registre CS.

Comme le montre la figure 2, le registre CS est contenu dans le microprocesseur 200 et est relié directement au registre R de manière à permettre l'évolution des données stockées telle que décrite.

On notera que par souci de sécurité, l'information mémorisée dans le registre CS ne peut être accédée que par le processeur lui-même, et ce qu'au cours de l'exécution des instructions DCALL et DRET.

Cependant, il est possible, selon un mode de réalisation optionnel de l'invention, de permettre de modifier le contenu du registre R par au moins un événement dit « matériel » ou en temps réel, qui peut agir directement et en temps réel sur le microprocesseur 200 pour appeler l'exécution d'un code. Ainsi un événement commandant une action ou la mise en éveil, ou l'acquittement de données, etc., peut mettre à jour directement le registre R.

Dans ce cas, l'événement matériel va utiliser les registres R et/ou CS pour mettre en place un numéro de procédé. Cependant, le procédé en question ne sera pas un procédé appelé par une instruction DCALL, mais un procédé « matériel ». Autrement dit, les instructions DCALL et DRET ne sont pas utilisées lors d'un tel événement matériel, et on utilise uniquement les registres R et CS avec une action qui est déjà pré-programmée dans le circuit et désignée par son procédé (par exemple par affectation d'un numéro).

On note que de telles instructions matérielles sont en principe réalisées par des logiques câblées ou autres moyens matériels.

Le second registre CS ne peut être directement accédé par les applications de la carte à puce afin de garantir l'intégrité du dispositif lors de sa mise en oeuvre lors de l'exécution d'une instruction de retour DRET.

Lorsque l'application courante a fini de s'exécuter, les bits du registre R prennent une valeur spécifique à l'application qui s'exécutait précédemment, lui restituant ainsi ses droits et ses limitations en terme d'accès mémoire.

Le dispositif d'accès à des zones mémoire, selon l'invention, permet d'assurer une grande sécurité en terme d'accès aux différentes zones de la mémoire, pour une architecture logicielle telle que celle présentée à la figure 1.

## Revendications

1. Dispositif d'accès à des applications d'une carte à puce (100), comprenant un microprocesseur (200) associé à un système d'exploitation fonctionnant avec un jeu d'instructions, une mémoire de programmes, une mémoire de la carte à puce dans laquelle est stockée une batterie d'applications (210), un premier registre (R) pour mémoriser un code d'identification à plusieurs bits identifiant une entité logicielle à exécuter, appelée par le microprocesseur dans l'une des mémoires, un dispositif de contrôle (220) pour contrôler le caractère autorisé de l'accès à des zones de la mémoire de la carte à puce par la nouvelle entité appelée, et une première liaison (230) entre le microprocesseur et le dispositif de contrôle pour transmettre le code d'identification à plusieurs bits en provenance du microprocesseur (200), le jeu d'instructions comprenant une instruction d'appel (DCALL) pour appeler une nouvelle entité à exécuter au moyen de son code d'identification à plusieurs bits, et pour mettre à jour instantanément et automatiquement le premier registre (R) en y mémorisant une première étiquette associée à l'entité appelée lors de l'intervention de cette nouvelle entité et une instruction de retour (RET), **caractérisé en ce que** le premier registre (R) appartient matériellement au microprocesseur, **en ce qu'**une deuxième étiquette est associée à chaque groupe de données en mémoire ou à des emplacements de la mémoire, et utilisée pour la lecture de données en mémoire, et **en ce que** le dispositif de contrôle autorise ou interdit l'accès à une nouvelle entité à exécuter en comparant les première et deuxième étiquettes.

2. Dispositif d'accès à des applications d'une carte à puce selon la revendication 1, **caractérisé en ce qu'**il comprend un second registre (CS) appartenant matériellement au microprocesseur, **en ce que** le jeu d'instructions comprend une instruction de retour (DRET), **en ce que** l'instruction d'appel (DCALL), au moment de son exécution, charge dans le second registre (CS) le code d'identification contenu dans le premier registre (R), et **en ce que** l'instruction de retour (DRET), au moment de son exécution, recharge instantanément et automatiquement le contenu du second registre (CS) dans le premier registre (R).

3. Dispositif selon la revendication 2, **caractérisé en ce que** l'entité à exécuter est identifiée par un évènement matériel, et **en ce que** cet évènement matériel sauvegarde le contenu du premier registre (R) dans le second registre (CS) et met à jour le premier registre (R).

4. Dispositif selon la revendication 3, **caractérisé en ce que** l'événement matériel est réalisé par une logique câblée ou autre moyen matériel, de manière à pouvoir inscrire dans le premier registre (R) l'entité propre à cet événement sans l'utilisation de l'instruction d'appel (DCALL).

5. Carte à puce à applications multiples (100) **caractérisée en ce qu'**elle comporte un dispositif d'accès à des applications selon l'une quelconque des revendications 1 à 4.

6. Carte à puce selon la revendication 5, **caractérisée en ce qu'**elle comprend au moins une application principale (122, 124, 126) écrite dans un langage de programmation directement compréhensible par le processeur de la carte à puce et au moins une application supplémentaire (121, 123, 125) codée en langage standardisé compréhensible par le processeur de la carte au moyen d'un interpréteur.

## Claims

1. Device for access to applications of a chip card (100), comprising a microprocessor (200) associated with an operating system functioning with an instruction set, a programme memory, a memory of the chip card in which is stored a suite of applications (210), a first register (R) for storing a multibit identification code identifying a software entity to be executed, called by the microprocessor in one of the memories, a monitoring device (220) for monitoring the authorized nature of the access to areas of the memory of the chip card via the new entity called, and a first link (230) between the microprocessor and the monitoring device for transmitting the multibit identification code originating from the microprocessor (200), the instruction set comprising a call instruction (DCALL) for calling a new entity to be executed by means of its multibit identification code, and for instantaneously and automatically updating the first register (R) by storing therein a first label associated with the called entity upon the intervention of this new entity and a return instruction (RET), **characterized in that** the first register (R) belongs hardware-wise to the microprocessor, **in that** a second label is associated with each group of data in memory or with locations of the memory, and is used for the reading of data in memory and **in that** the monitoring device authorizes or prohibits access to a new entity to be executed by comparing the first and second labels.

2. Device for access to applications of a chip card according to Claim 1, **characterized in that** it comprises a second register (CS) belonging hardware-wise to the microprocessor, **in that** the instruction set comprises a return instruction (DRET), **in that** the call instruction (DCALL), at the moment of its execution, loads the identification code contained in the first register (R) into the second register (CS), and **in that** the return instruction (DRET), at the moment of its execution, instantaneously and automatically reloads the content of the second register (CS) into the first register (R).

3. Device according to Claim 2, **characterized in that** the entity to be executed is identified by a hardware event, and **in that** this hardware event saves the content of the first register (R) in the second register (CS) and updates the first register (R).

4. Device according to Claim 3, **characterized in that** the hardware event is realized by hard-wired logic or some other hardware means, in such a way as to be able to write the entity specific to this event to the first register (R) without using the call instruction (DCALL).

5. Chip card with multiple applications (100) **characterized in that** it comprises a device for access to applications according to any one of Claims 1 to 4.

6. Chip card according to Claim 5, **characterized in that** it comprises at least one main application (122, 124, 126) written in a programming language directly comprehensible to the processor of the chip card and at least one additional application (121, 123, 125) coded in a standardized language comprehensible to the processor of the card by means of an interpreter.

## Patentansprüche

1. Zugriffseinrichtung auf Anwendungen einer Chipkarte (100), mit einem Mikroprozessor (200), der einem mit einem Befehlsvorrat arbeitenden Betriebssystem zugeordnet ist, einem Programmspeicher, einem Chipkartenspeicher, in welchem eine Anwendungsgruppe (210) gespeichert ist, einem ersten Register (R) zum Abspeichem eines mehrstelligen Identifikationscodes, der eine auszuführende Softwareeinheit identifiziert, die von dem Mikroprozessor in einen der Speicher aufgerufen wird, einer Prüfeinrichtung (220) zum Prüfen des autorisierten Charakters des Zugriffs auf die Zonen der Speicherkarte durch die aufgerufene neue Einheit, und einer ersten Verbindung (230) zwischen dem Mikroprozessor und der Prüfeinrichtung, um den mehrstelligen Identifikationscode vom Mikroprozessor (200) aus zu übertragen, wobei der Befehlsvorrat einen Aufruf-Befehl (DCALL) umfaßt, um eine neu auszuführende Einheit mit Hilfe seines mehrstelligen Identifkationscodes aufzurufen und um beim Eingang dieser neuen Einheit das erste Register (R) sofort und automatisch zu aktualisieren, indem darin ein erstes Kennzeichen abgespeichert wird, **dadurch gekennzeichnet, daß** das erste Register (R) materiell zum Mikroprozessor gehört, daß ein zweites Kennzeichen jeder Speicherdatengruppe oder den Speicherstellen zugeordnet ist und für das Auslesen von Speicherdaten verwendet wird, und daß die Prüfeinrichtung den Zugriff auf eine neu auszuführende Einheit durch Vergleich des ersten und zweiten Kennzeichens autorisiert oder verbietet.

2. Zugriffseinrichtung auf Anwendungen einer Chipkarte nach Anspruch 1, **dadurch gekennzeichnet, daß** diese ein zweites Register (CS) aufweist, welches materiell zum Mikroprozessor gehört, daß der Befehlsvorrat einen Rücksprung-Befehl (DRET) umfaßt, daß der Aufruf-Befehl (DCALL) im Augenblick seiner Ausführung den in dem ersten Register (R) enthaltenen Identifikationscode in das zweite Register (CS) lädt, und daß der Rücksprung-Befehl (DRET) im Augenblick seiner Ausführung den Inhalt des zweiten Register (CS) sofort und automatisch in das erste Register (R) zurücklädt.

3. Einrichtung nach Anspruch 2, **dadurch gekennzeichnet, daß** die auszuführende Einheit durch ein materielles Ereignis identifiziert wird, und daß das materielle Ereignis den Inhalt des ersten Registers (R) in dem zweiten Register (CS) sichert und das erste Register (R) aktualisiert.

4. Einrichtung nach Anspruch 3, **dadurch gekennzeichnet, daß** das materielle Ereignis durch eine fest verdrahtete Logik oder ein anderes materielles Mittel realisiert wird, so daß die für dieses Ereignis richtige Einheit ohne Verwendung des Aufruf-Befehles (DCALL) in das erste Register (R) eingeschrieben werden kann.

5. Chipkarte für Mehrfachanwendungen (100), **dadurch gekennzeichnet, daß** diese eine Zugriffseinrichtung auf Anwendungen gemäß einem der Ansprüche 1-4 umfaßt.

6. Chipkarte nach Anspruch 5, **dadurch gekennzeichnet, daß** diese aufweist wenigstens eine Hauptanwendung (122, 124, 126), die in einer von dem Prozessor der Chipkarte direkt verständlichen Programmiersprache geschrieben ist, und wenigstens eine Zusatzanwendung (121, 123, 125), die in einer Standardsprache kodiert ist, die für den Prozessor der Karte mit Hilfe eines Interpreters verständlich ist.
